# FASCICULE DE BREVET EUROPEEN

(11) **EP 1 020 345 B1**
(45) Date de publication et mention de la délivrance du brevet: **03.11.2004**
(21) Numéro de dépôt: 99403182.1
(22) Date de dépôt: 17.12.1999
(51) Int. Cl.: B62D 25/06

(54) **Dispositif de renfort pour panneau de pavillon de véhicule automobile et procédé de montage d'un ensemble de pavillon sur une caisse de véhicule automobile**
Vorrichtung zur Verstärkung der Dachplatte für ein Kraftfahrzeug und Verfahren zur Montage einer Dachplatteneinheit in die Karrosserie eines Kraftfahrzeuges
Reinforcement device for the roof panel of a vehicle and method for mounting a roof panel unit in an automobile body

(30) Priorité: 12.01.1999 FR 9900229
(43) Date de publication de la demande: 19.07.2000
(73) Titulaire: Renault s.a.s., 92100 Boulogne Billancourt (FR)
(72) Inventeur: Cuni, Didier, 78990 Elancourt (FR); Zhang, Charles, 78280 Guyancourt (FR); Lemoine, Rémi, 92150 Suresnes (FR)

(56) Documents cités:
- DE-A- 4 401 041
- DE-C- 951 331
- US-A- 4 229 037
- PATENT ABSTRACTS OF JAPAN vol. 016, no. 258 (M-1264), 11 juin 1992 (1992-06-11) & JP 04 063773 A (MAZDA MOTOR CORP), 28 février 1992 (1992-02-28)

## Description

La présente invention est relative à un dispositif de renfort pour panneau de pavillon de véhicule automobile, et à un procédé de montage d'un ensemble de pavillon sur une caisse de véhicule automobile.

Plus particulièrement elle concerne un dispositif de renfort pour panneau de pavillon de véhicule automobile selon la préambule de la revendication 1.

Pour répondre aux exigences de résistance aux chocs, d'isolation acoustique et d'aménagement de l'habitacle des véhicules automobiles, on a été conduit à fixer une pluralité de pièces de renfort sous le panneau de pavillon (ou « toit ») de ces véhicules.

Dans le processus de montage, classiquement, on commence par fixer le panneau de pavillon sur la superstructure de la caisse du véhicule, et on vient ensuite rapporter chacune des pièces de renfort sous ce panneau de pavillon.

Chaque pièce de renfort est ainsi fixée individuellement sous le panneau de pavillon, en général par un robot soudeur qui doit pénétrer à l'intérieur de l'habitacle afin de réaliser les points de soudure adaptés.

Outre le fait que ce processus de montage met en jeu une multiplicité de pièces détachées et un grand nombre d'opérations élémentaires, il implique une cinématique des robots de soudage qui est particulièrement complexe. Il en résulte un coût de production élevé, ainsi que de nombreuses difficultés liées à la grande finesse du réglage des robots qui est requise pour réaliser un assemblage convenable.

La présente invention a pour but de fournir un dispositif et un procédé permettant de s'affranchir de ces inconvénients.

On atteint ce but de l'invention, ainsi que d'autres qui apparaîtront à la lecture de ce qui va suivre, avec un dispositif de renfort pour panneau de pavillon de véhicule automobile selon la revendication 1.

Suivant d'autres caractéristiques de ce dispositif:
- ladite plaque de doublure comporte des rives latérales destinées à être fixées à la fois sur ledit panneau de pavillon et sur des éléments de superstructure dudit véhicule automobile,
- la partie avant de ladite plaque de doublure comporte une rive frontale destinée à être fixée sur ledit panneau de pavillon et à supporter un pare-brise,
- ladite plaque de doublure comporte une première ouverture destinée à la mise en place d'un toit ouvrant, cette ouverture étant bordée d'un bourrelet rigidifiant,
- ladite première ouverture est barrée par un organe de renfort longitudinal,
- ladite plaque de doublure comporte une traverse de renfort située sensiblement à la moitié de sa longueur,
- ladite plaque de doublure comporte une deuxième ouverture conformée de manière à améliorer l'acoustique de l'habitacle dudit véhicule automobile, cette ouverture étant bordée d'un bourrelet rigidifiant,
- ladite deuxième ouverture a un contour en forme de champignon,
- la partie arrière de ladite plaque de doublure comporte une rive destinée à être fixée sur ledit panneau de pavillon et à supporter une lunette arrière,
- la partie arrière de ladite plaque de doublure comporte des encoches destinées à permettre l'articulation d'un hayon,
- la partie arrière de ladite plaque de doublure comporte des nervures rigidifiantes,
- ladite plaque de doublure comporte des orifices destinés à la mise en place d'équipements tels qu'un rétroviseur et des plafonniers,
- ladite plaque de doublure est une tôle d'acier convenablement emboutie et/ou découpée.

Grâce à ce dispositif, on remplace l'ensemble des pièces de renfort de la technique antérieure par une seule plaque de doublure remplissant à la fois des fonctions de renfort, d'isolation acoustique et d'aménagement de l'habitacle du véhicule, ce qui permet de limiter considérablement le nombre d'opérations élémentaires de montage.

L'invention fournit également un procédé de montage d'un ensemble de pavillon sur une caisse de véhicule automobile comportant une superstructure, remarquable en ce qu'il comprend les étapes consistant:
- a) à fixer par soudage et/ou collage un dispositif de renfort conforme à ce qui précède sous un panneau de pavillon, et
- b) à venir fixer par exemple par soudage l'ensemble de pavillon obtenu à l'étape a) sur ladite superstructure.

Grâce à ce procédé, on peut réaliser les opérations de fixation du dispositif de renfort sous le panneau de pavillon avant de rapporter cet ensemble sur la caisse du véhicule, ce qui permet de simplifier notablement la cinématique des robots de montage par rapport à la technique antérieure.

D'autres caractéristiques et avantages de la présente invention apparaîtront à la lecture de la description qui va suivre et à l'examen du dessin annexé, dans lequel:
- la figure 1 est une vue en perspective du dispositif selon l'invention,
- la figure 2 est une section transversale d'une zone de liaison d'une rive latérale du dispositif selon l'invention avec un panneau de pavillon et avec un élément de superstructure de la caisse d'un véhicule automobile,
- la figure 3 est analogue à la figure 2, mais pour un véhicule de la technique antérieure,
- la figure 4 est une section longitudinale de la zone de liaison de la rive frontale du dispositif selon l'invention avec un panneau de pavillon et avec un pare-brise,
- la figure 5 est analogue à la figure 4, mais pour un véhicule de la technique antérieure.

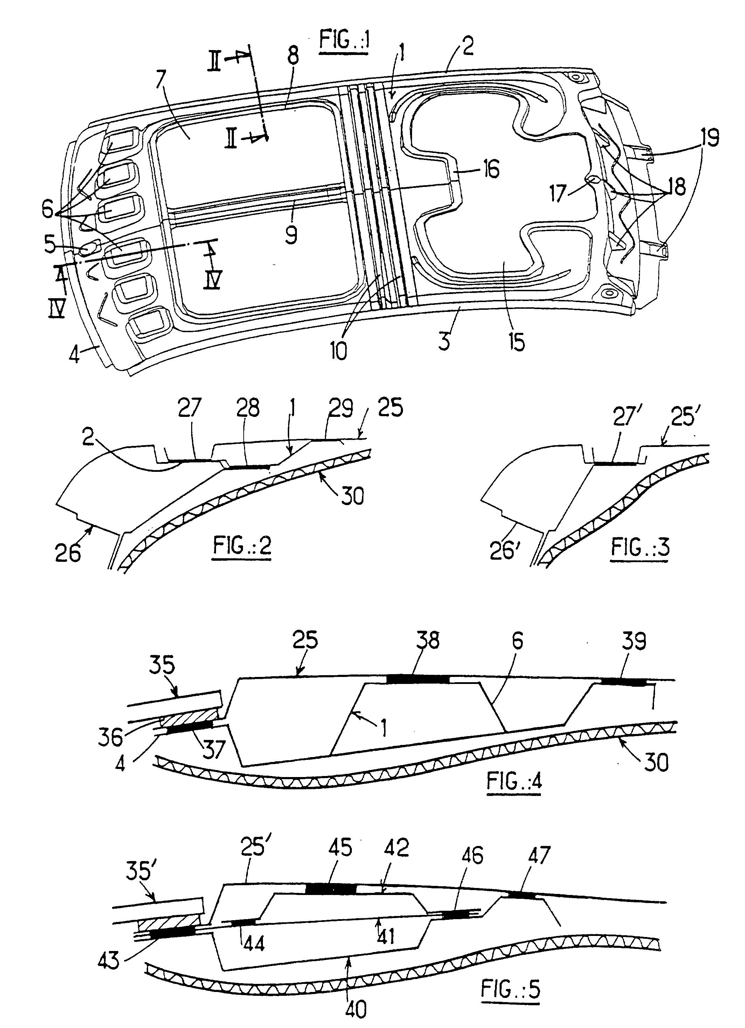

Dans ce qui suit, on sera amené à utiliser les termes « avant », « frontal », « latéral » et « arrière ». Ces termes doivent s'entendre par rapport au sens d'avancement d'un véhicule automobile destiné à être équipé d'un dispositif selon l'invention. Pour les figures 1, 4 et 5 en particulier, ce sens d'avancement est orienté vers la gauche de la feuille.

On se reporte à présent à la figure 1, sur laquelle on peut voir le dispositif selon l'invention.

Ce dispositif a la forme générale d'une plaque 1 - appelée « plaque de doublure » dans ce qui suit - conformée d'une manière particulière, obtenue de préférence par emboutissage et découpage d'une seule et même tôle d'acier.

Cette plaque de doublure, dont le contour est sensiblement rectangulaire, comporte deux rives latérales 2, 3 sur ses deux plus grands côtés.

En allant de l'avant vers l'arrière de la plaque de doublure 1, on trouve successivement:
- une rive frontale 4,
- un premier orifice 5 situé sensiblement au milieu de la largeur de la plaque de doublure 1,
- une série de caissons rigidifiants 6 de forme sensiblement parallélépipédique répartis sur toute la largeur de la plaque de doublure 1,
- une première ouverture 7 de forme sensiblement rectangulaire, bordée par un bourrelet rigidifiant 8. Selon les cas (voir plus loin), cette ouverture peut être barrée ou non par un organe de renfort longitudinal 9,
- une traverse de renfort 10 s'étendant sur toute la largeur de la plaque de doublure 1, à peu près au milieu de sa longueur,
- une deuxième ouverture 15 dont le contour définit sensiblement une forme de champignon, bordée elle aussi par un bourrelet rigidifiant 16,
- un deuxième orifice 17 situé sensiblement au milieu de la largeur de la plaque de doublure 1,
- une série de nervures rigidifiantes 18,
- des encoches 19 ou, selon les cas (voir plus loin), une rive (non représentée).

La plaque de doublure 1 est destinée à doubler un panneau de carrosserie formant le « toit » d'un véhicule automobile, appelé « panneau de pavillon » dans ce qui suit.

La fixation de la plaque de doublure 1 sur le panneau de pavillon s'effectue par soudage et/ou collage en certains points de sa face visible sur la figure 1.

On a représenté sur la figure 2 la zone de liaison de la rive latérale 2 de la plaque de doublure 1 avec un panneau de pavillon 25 et avec un élément de superstructure 26 de la caisse d'un véhicule automobile.

Comme on peut le voir sur cette figure, la rive latérale 2 est prise « en sandwich » entre d'une part le bord du panneau de pavillon 25 et d'autre part le bord de l'élément de superstructure 26.

Un premier point de soudure 27 assure la fixation du panneau de pavillon 25 sur la plaque de doublure 1, ainsi que la fixation de cette plaque de doublure sur l'élément de superstructure 26; un deuxième point de soudure 28 assure la fixation de la plaque de doublure 1 sur l'élément de superstructure 26, et un troisième point de soudure 29 assure la fixation du panneau de pavillon 25 sur la plaque de doublure 1. Une garniture de pavillon 30 permet de masquer cette zone de liaison.

Dans la technique antérieure (voir figure 3), le panneau de pavillon 25' est soudé en un seul point 27' sur l'élément de superstructure 26'.

On a représenté sur la figure 4 la zone de liaison de la rive frontale du dispositif selon l'invention avec le panneau de pavillon 25 et avec un pare-brise 35.

Comme on peut le voir sur cette figure, le panneau de pavillon 25 est pris « en sandwich » entre d'une part la rive frontale 4 de la plaque de doublure 1 et d'autre part le bord du pare-brise 35.

Un joint 36 assure l'étanchéité de la liaison entre la panneau de pavillon 25 et le pare-brise 35, et plusieurs points de soudure 37, 38, 39 assurent la fixation de la plaque de doublure 1 sur le panneau de pavillon 25. La garniture 30 permet de masquer cette zone de liaison.

On remarquera, accessoirement, que l'on peut voir l'un des caissons rigidifiants 6 en coupe sur la figure 4.

Dans la technique antérieure (voir figure 5), la zone de liaison du panneau de pavillon 25' avec le pare-brise 35' comporte typiquement trois pièces 40, 41, 42 fixées entre elles et sur le panneau de pavillon 25' par au moins cinq points de soudure 43, 44, 45, 46, 47.

L'intérêt du dispositif selon l'invention découle directement de la description qui précède.

Ce dispositif permet d'intégrer, en une seule et même plaque de doublure 1, des fonctions remplies habituellement par une pluralité de pièces (couramment six ou sept) rapportées sous le panneau de pavillon 25. Comme on a pu le voir dans le cas particulier de la zone de liaison entre le panneau de pavillon et le pare-brise (voir figures 4 et 5), on réduit ainsi notamment le nombre d'opérations de soudage et/ou de collage à réaliser.

Les caissons rigidifiants 6, les bourrelets rigidifiants 8 et 16, l'organe de renfort longitudinal 9, la traverse de renfort 10 et les nervures rigidifiantes 18 assurent la fonction de renfort du panneau de pavillon 25.

La rigidité de l'ensemble de pavillon formé par le panneau de pavillon 25 et la plaque de doublure 1 est accrue par le mode de fixation des rives latérales 2, dans lequel on réalise trois points de soudure 27, 28, 29 au lieu d'un seul 27' dans la technique antérieure (voir figures 2 et 3).

L'isolation acoustique de l'habitacle du véhicule automobile est améliorée par l'effet de doublure réalisé par la plaque de doublure 1.

On notera en outre que la deuxième ouverture 15, avec son contour en forme de champignon, permet de réduire notablement les phénomènes de résonance de l'ensemble de pavillon, et elle contribue ainsi à la diminution du niveau sonore dans l'habitacle. Les différentes parties rigidifiantes de la plaque de doublure 1 (caissons 6, bourrelets 8, 16, traverse 10, nervures 18) permettent également de mieux contrôler ces phénomènes de résonance.

Les premier 5 et deuxième 17 orifices permettent la mise en place d'équipements tels qu'un rétroviseur et des plafonniers.

La première ouverture 7 est destinée à la mise en place d'un ensemble de toit ouvrant. Cette ouverture permet de simplifier considérablement le montage d'un tel ensemble, lequel nécessite habituellement l'intervention d'un sous-traitant extérieur pour fixer un cadre spécial sur le panneau de pavillon.

Lors de la mise en place d'un ensemble de toit ouvrant, l'organe de renfort longitudinal 9 est supprimé. Sinon, cet organe peut servir de support à certains équipements tels que des coffrets de rangement ou autres accessoires tels qu'un écran LCD de télévision escamotable, un plafonnier central, un micro de téléphone, etc.

Les encoches 19 permettent, le cas échéant, l'articulation d'un hayon. En l'absence de hayon, l'arrière de la plaque de doublure 1 peut comporter une rive analogue à la rive frontale 4, destinée à être fixée sur la panneau de pavillon 25 et à supporter une lunette arrière (non représentée).

Outre les avantages énumérés ci-dessus, le dispositif selon l'invention permet de simplifier les opérations de montage de l'ensemble de pavillon par rapport à la technique antérieure.

En effet, on peut envisager de fixer la plaque de doublure 1 par soudage et/ou collage sous le panneau de pavillon 25 avant de fixer cet ensemble sur la superstructure du véhicule automobile, puis de rapporter cet ensemble sur cette superstructure et de l'y fixer par tout moyen approprié, comme par exemple par soudage.

Un tel procédé permet de simplifier la cinématique des robots de montage, dans la mesure où ceux-ci n'ont plus à intervenir à l'intérieur de l'habitacle du véhicule, mais seulement sur les parties latérales, avant et arrière de celui-ci.

En outre, la rigidité conférée par le dispositif selon l'invention à l'ensemble de pavillon permet de forcer légèrement sur les éléments de superstructure pour rattraper d'éventuels écarts dimensionnels, à l'inverse des panneaux de pavillon de la technique antérieure, trop souples pour remplir ce rôle.

Bien entendu, la présente invention n'est pas limitée au mode de réalisation décrit et représenté, fourni à titre purement illustratif.

## Revendications

1. Dispositif de renfort pour panneau de pavillon (25) de véhicule automobile, comprenant une pluralité d'organes de renfort (6, 8, 9, 10, 16, 18) formés dans une seule et même plaque (1) destinée à venir doubler ledit panneau de pavillon (25), cette plaque comportant une première ouverture (7) destinée à la mise en place d'un toit ouvrant, ainsi qu'une deuxième ouverture (15) conformée de manière à améliorer l'acoustique de l'habitacle dudit véhicule automobile, **caractérisé en ce que** les organes de renforts comprennent des caissons rigidifiant (6) situés sur la partie avant de la plaque de doublure permettant de réduire les phénomènes de résonance.

2. Dispositif selon la revendication 1, **caractérisé en ce que** lesdites première (7) et deuxième (15) ouvertures sont bordées chacune par un bourrelet rigidifiant (8, 17).

3. Dispositif selon l'une des revendications 1 ou 2, **caractérisé en ce que** ladite plaque de doublure (1) comporte des rives latérales (2) destinées à être fixées à la fois sur ledit panneau de pavillon (25) et sur des éléments de superstructure (26) dudit véhicule automobile.

4. Dispositif selon l'une quelconque des revendications 1 à 3, **caractérisé en ce que** la partie avant de ladite plaque de doublure (1) comporte une rive frontale (4) destinée à être fixée sur ledit panneau de pavillon (25) et à supporter un pare-brise (35).

5. Dispositif selon l'une quelconque des revendications précédentes, **caractérisé en ce que** ladite première ouverture (7) est barrée par un organe de renfort longitudinal (9).

6. Dispositif selon l'une quelconque des revendications précédentes, **caractérisé en ce que** ladite plaque de doublure (1) comporte une traverse de renfort (10) située sensiblement à la moitié de sa longueur.

7. Dispositif selon l'une quelconque des revendications précédentes, **caractérisé en ce que** ladite deuxième ouverture (15) au un contour en forme de champignon.

8. Dispositif selon l'une quelconque des revendications précédentes, **caractérisé en ce que** la partie arrière de ladite plaque de doublure (1) comporte une rive destinée à être fixée sur ledit panneau de pavillon (25) et à supporter une lunette arrière.

9. Dispositif selon l'une quelconque des revendications précédentes, **caractérisé en ce que** la partie arrière de ladite plaque de doublure (1) comporte des encoches (19) destinées à permettre l'articulation d'un hayon.

10. Dispositif selon l'une quelconque des revendications précédentes, **caractérisé en ce que** la partie arrière de ladite plaque de doublure (1) comporte des nervures rigidifiantes (18).

11. Dispositif selon l'une quelconque des revendications précédentes, **caractérisé en ce que** ladite plaque de doublure (1) comporte des orifices (5, 17) destinés à la mise en place d'équipements tels qu'un rétroviseur et des plafonniers.

12. Dispositif selon l'une quelconque des revendications précédentes, **caractérisé en ce que** ladite plaque de doublure (1) est une tôle d'acier convenablement emboutie et/ou découpée.

13. Ensemble de pavillon de véhicule automobile, **caractérisé en ce qu'**il comprend un panneau de pavillon (25) et, fixé sous ce pavillon par soudage et/ou collage, un dispositif de renfort (1) conforme à l'une quelconque des revendications précédentes.

14. Caisse de véhicule automobile comportant des éléments de superstructure (26), **caractérisée en ce qu'**elle comprend un ensemble de pavillon conforme à la revendication 15 fixé par exemple par soudage sur lesdits éléments de superstructure (26).

15. Procédé de montage d'un ensemble de pavillon sur une caisse de véhicule automobile comportant une superstructure (26), **caractérisé en ce qu'**il comprend les étapes consistant:
- a) à fixer par soudage et/ou collage un dispositif de renfort (1) conforme à l'une quelconque des revendications 1 à 13 sous un panneau de pavillon (25), et
- b) à venir fixer par exemple par soudage l'ensemble de pavillon obtenu à l'étape a) sur ladite superstructure (26).

## Claims

1. A reinforcing device for a roof panel (25) of an automobile vehicle, comprising a plurality of reinforcing members (6, 8, 9, 10, 16, 18) formed in the same single plate (1) adapted to line the roof panel (25), this plate comprising a first opening (7) adapted for the positioning of a sliding roof, and a second opening (15) shaped so as to improve the acoustics of the passenger space of the automobile vehicle, **characterised in that** the reinforcing members comprise stiffening boxes (6) disposed on the front portion of the lining plate and making it possible to reduce phenomena of resonance.

2. A device as claimed in claim 1, **characterised in that** the first (7) and second (15) openings are each bordered by a stiffening band (8, 17).

3. A device as claimed in one of claims 1 or 2, **characterised in that** the lining plate (1) comprises lateral edges (2) adapted to be secured both to the roof panel (25) and to superstructure members (26) of the automobile vehicle.

4. A device as claimed in any one of claims 1 to 3, **characterised in that** the front portion of the lining plate (1) comprises a front edge (4) adapted to be secured to the roof panel (25) and to support a windscreen (35).

5. A device as claimed in any one of the preceding claims, **characterised in that** the first opening (7) is crossed by a longitudinal reinforcing member (9).

6. A device as claimed in any one of the preceding claims, **characterised in that** the lining plate (1) comprises a reinforcing crossbar (10) disposed substantially midway with respect to its length.

7. A device as claimed in any one of the preceding claims, **characterised in that** the second opening (15) has a contour in the shape of a mushroom.

8. A device as claimed in any one of the preceding claims, **characterised in that** the rear portion of the lining plate (1) comprises an edge adapted to be secured to the roof panel (25) and to support a rear window.

9. A device as claimed in any one of the preceding claims, **characterised in that** the rear portion of the lining plate (1) comprises notches (19) adapted to enable the articulation of a hatchback.

10. A device as claimed in any one of the preceding claims, **characterised in that** the rear portion of the lining plate (1) comprises stiffening ribs (18).

11. A device as claimed in any one of the preceding claims, **characterised in that** the lining plate (1) comprises openings (5, 17) adapted for the positioning of equipment such as a rear-view mirror and ceiling lamps.

12. A device as claimed in any one of the preceding claims, **characterised in that** the lining plate (1) is of appropriately drawn and/or stamped steel sheet.

13. An automobile vehicle roof assembly, **characterised in that** it comprises a roof panel (25) and, secured below this panel by welding and/or adhesion, a reinforcing device (1) as claimed in any one of the preceding claims.

14. An automobile vehicle bodywork comprising superstructure members (26), **characterised in that** it comprises a roof assembly as claimed in claim 15 secured for instance by welding to the superstructure members (26).

15. A method of assembly of a roof assembly on an automobile vehicle bodywork comprising a superstructure (26), **characterised in that** it comprises the stages of:
a) securing, by welding and/or adhesion, a reinforcing device (1) as claimed in any one of claims 1 to 13 below a roof panel (25),
b) securing, for instance by welding, the roof assembly obtained in stage a) to the superstructure (26).

## Patentansprüche

1. Verstärkungsvorrichtung für eine Dachplatte (25) eines Kraftfahrzeugs, welche eine Mehrzahl von Verstärkungselementen (6, 8, 9, 10, 16, 18) aufweist, welche in einer einzigen und derselben Platte (1) gebildet sind, welche dafür bestimmt ist, die Dachplatte (25) auszukleiden, wobei diese Platte eine erste Öffnung (7) aufweist, welche für das Einsetzen eines Schiebedachs bestimmt ist, sowie eine zweite Öffnung (15), welche derart gebildet ist, um die Akustik der Fahrgastzelle des Kraftfahrzeugs zu verbessern, **dadurch gekennzeichnet, dass** die Verstärkungselemente verstärkende Kästen (6) umfassen, welche an den vorderen Teil der Verkleidungsplatte angeordnet sind, wobei sie es ermöglichen, die Resonanzphänomene zu reduzieren.

2. Vorrichtung nach Anspruch 1, **dadurch gekennzeichnet, dass** die erste Öffnung (7) und die zweite Öffnung (15) jede durch einem versteifenden Wulst (8, 17) umrandet sind.

3. Vorrichtung nach irgendeinem der Ansprüche 1 oder 2, **dadurch gekennzeichnet, dass** die Verkleidungsplatte (1) Randstreifen (2) umfasst, welche dafür bestimmt sind, gleichzeitig an der Dachplatte (25) und an Elementen eines Oberbaus (26) des Kraftfahrzeugs befestigt zu werden.

4. Vorrichtung nach irgendeinem der Ansprüche 1 bis 3, **dadurch gekennzeichnet, dass** der vordere Teil der Verkleidungsplatte (1) einen frontalen Randstreifen (4) aufweist, welcher dafür bestimmt ist, an der Dachplatte (25) befestigt zu sein und eine Windschutzscheibe (35) zu tragen.

5. Vorrichtung nach irgendeinem der vorhergehenden Ansprüche, **dadurch gekennzeichnet, dass** die erste Öffnung (7) durch ein longitudinales Verstärkungselement (9) geschlossen ist.

6. Vorrichtung nach irgendeinem der vorhergehenden Ansprüche, **dadurch gekennzeichnet, dass** die Verkleidungsplatte (1) einen Verstärkungs-Querträger (10) aufweist, welcher im Wesentlichen auf der Hälfte ihrer Länge angeordnet ist.

7. Vorrichtung nach irgendeinem der vorhergehenden Ansprüche, **dadurch gekennzeichnet, dass** die zweite Öffnung (15) einen Umriss in Form eines Pilzes aufweist.

8. Vorrichtung nach irgendeinem der vorhergehenden Ansprüche, **dadurch gekennzeichnet, dass** der hintere Teil der Verkleidungsplatte (1) einen Randstreifen aufweist, welcher dafür bestimmt ist, an der Deckplatte (25) befestigt zu werden und ein Heckfenster zu tragen.

9. Vorrichtung nach irgendeinem der vorhergehenden Ansprüche, **dadurch gekennzeichnet, dass** der hintere Teil der Verkleidungsplatte (1) Ausschnitte (19) aufweist, die dafür bestimmt sind, die Anlenkung einer Heckklappe zu erlauben.

10. Vorrichtung nach irgendeinem der vorhergehenden Ansprüche, **dadurch gekennzeichnet, dass** der hintere Teil der Verkleidungsplatte (1) versteifende Rippen (18) aufweist.

11. Vorrichtung nach irgendeinem der vorhergehenden Ansprüche, **dadurch gekennzeichnet, dass** die Verkleidungsplatte (1) Öffnungen (5, 17) aufweist, welche für das Einsetzen von Ausstattungsstücken, wie z.B. einem Rückspiegel oder Deckenleuchten, bestimmt sind.

12. Vorrichtung nach irgendeinem der vorhergehenden Ansprüche, **dadurch gekennzeichnet, dass** die Verkleidungsplatte (1) ein Stahlblech ist, welches in passender Art und Weise tiefgezogen und/oder ausgestanzt ist.

13. Dachgesamtheit eines Kraftfahrzeugs, **dadurch gekennzeichnet, dass** sie eine Dachplatte (25) und eine Verstärkungsvorrichtung (1) gemäß irgendeinem der vorhergehenden Ansprüche aufweist, welche unter diesem Dach durch Schweißung und/oder durch Klebung befestigt ist.

14. Karosserie eines Kraftfahrzeugs aufweisend Elemente eines Oberbaus (26), **dadurch gekennzeichnet, dass** sie eine Dachgesamtheit gemäß Anspruch 13 aufweist, welche z.B. durch Schweißung an den Elementen des Oberbaus (26) befestigt ist.

15. Verfahren einer Montage einer Dachgesamtheit an einer Kraftfahrzeugkarosserie, welche einen Oberbau (26) aufweist, **dadurch gekennzeichnet, dass** es die Schritte aufweist, die bestehen aus:
a) Befestigen einer Verstärkungsvorrichtung (1) durch Schweißung und/oder durch Klebung entsprechend irgendeinem der Ansprüche 1 bis 13 unter einer Dachplatte (25), und
b) Befestigen der Dachgesamtheit, welche in Schritt a) erhalten wurde, an dem Oberbau (26) z.B. durch Klebung.
